# EUROPEAN PATENT APPLICATION

(11) **EP 1 204 030 A1**
(43) Date of publication of application: **08.05.2002**
(21) Application number: 00309703.7
(22) Date of filing: 02.11.2000
(51) Int. Cl.: G06F 17/30

(54) **Extending hypermedia documents by adding tagged attributes**

(71) Applicant: Caplin Systems Limited, London EC2A 1BR (GB)
(72) Inventor: Caplin, Paul, London W11 2PY (GB)
(74) Representative: Walaski, Jan Filip

(57) **Abstract**

Undefined tags and tag attributes are embedded in a web page written in HTML. The web page includes a script which interprets the undefined attributes to perform a predefined action. The undefined tag attributes can refer to elements of a data source such as a stock and the current value of the stock. The interpreted attributes are used to retrieve the stock and value of interest from a real-time data source, and to write the values into the web page, so that they are displayed in the form of a real-time data stream.

## Description

This invention relates to the field of hypermedia document mark-up languages, and includes the provision of arbitrary extensions to hypertext markup language (HTML), particularly but not exclusively for providing real-time data streaming to a web page.

The World Wide Web is based on hypertext, which can be thought of as text which is not constrained to be sequential. The Web can handle much more than just text, so the more general term hypermedia is used to cover all types of content, including but not limited to pictures, graphics, sound and video. While the primary language for representing hypermedia content on the Web is HTML, other markup languages are constantly developing, including, for example, XML. The term hypermedia as used herein is therefore not intended to be limited to any particular web language, nor indeed to the World Wide Web, but should be interpreted as a general term which can also refer to content on public or private networks which operate according to Hypertext Transfer Protocol (HTTP) or other similar protocols.

As mentioned above, HTML is a document mark-up language which is the primary language for creating documents on the World Wide Web. It defines the structure and layout of a Web document by reference to a number of pre-defined tags with associated attributes. The tags and attributes are interpreted and the web page is accordingly displayed by a client application running on a computer, commonly referred to as a browser.

Although the use of HTML on its own produces essentially static Web pages, it is well known to use scripting languages such as Javascript to enhance HTML functionality; the combination is often referred to as Dynamic HTML. The current generation of browsers use a document object model (DOM) to represent web pages internally. This makes all of the content on a page available to scripting code and enables programmers to build documents, navigate their structure and add, modify or delete elements and content. In general, however, any non-standard behaviour in a page must be implemented by custom programming in a language other than the markup language, and the nature of such behaviour cannot be specified or governed from within the markup language itself, even if, as in the case of XML, that language is inherently extensible. The present invention seeks to address this limitation.

According to the present invention, there is provided a method of processing a hypermedia document, the document comprising information defined in a hypermedia markup language, information which is undefined in the hypermedia markup language and program instructions, the method comprising executing the program instructions to perform a predetermined function in dependence on the undefined information.

The program instructions can be defined in a scripting language.

The undefined information can be embedded in the defined information, for example as additional attributes of a tag which is defined in the markup language, and the method can further comprise extracting the undefined information from the defined information. For instance, the method can comprise searching for the tag and then searching for and extracting the additional attributes.

Advantageously, the method according to the invention provides a way of controlling the behaviour of the program executing within the hypermedia document by implementing a non-standard tag or adding attributes to a standard tag.

The undefined information can be referenced through a document object model created from the hypermedia document by a client application, such as a web browser and the method can comprise searching the document object model for the undefined information.

The method can also include retrieving data to be displayed from an external source in dependence on the undefined information. By retrieving real-time data periodically, or receiving it continuously in response to a request for the data, real-time streaming can be achieved for display by a web browser.

According to the invention, there is further provided a hypermedia document for display by a client application, the document including information defined in a hypermedia markup language, information which is undefined in the hypermedia markup language and program instructions, the program instructions being executable to perform a predetermined function in dependence on the undefined information.

The defined information can include a tag having defined attributes and the undefined information can comprise additional undefined attributes for the tag. The creation of additional attributes in this way, or the creation of entirely non-standard extension tags, can permit arbitrary extensions to the markup language in use, without having to follow the constraints imposed by the structure or syntactical requirements of the language or the restrictions imposed by the browser software.

In an advantageous example, the undefined attributes can index elements of a data source, which can permit real-time streaming of data into a location in the hypermedia document, whereby said data can be displayed.

According to the invention, there is also provided a method of providing real-time information for display as a hypermedia document, the document including a tag defining the location at which the information is to be displayed, the tag being associated with at least one attribute, comprising retrieving the information to be displayed in dependence on the one or more attributes associated with the tag and writing the information to the predefined location in the hypermedia document.

The invention also provides a system for displaying information, comprising means for accessing a hypermedia document, a client application for displaying the hypermedia document, program means associated with the hypermedia document for interpreting information within the hypermedia document which is not interpretable by the client application, and means for receiving information to be displayed in response to said interpretation. The hypermedia document can include a tag defining the location at which the information is to be displayed, the tag being associated with at least one attribute which is interpretable by the client application, the information which is not interpretable by the client application can comprise additional attributes associated with the tag which index the data to be displayed.

Embodiments of the invention will now be described by way of example with reference to the accompanying drawings, in which:
Figure 1 is a schematic diagram of an Internet based system;
Figure 2 is a schematic diagram of the architecture of a typical computer;
Figure 3 illustrates a document object model corresponding to a first code extract;
Figure 4 illustrates a document object model corresponding to a second code extract;
Figure 5 is a flow chart illustrating the function of a Javascript program configured to define the function of an extension tag;
Figure 6 is a screen-shot of a web page which uses extension tags to display real-time market data; and
Figure 7 is a flow chart describing the placement of real-time financial information onto a web page in accordance with the invention.

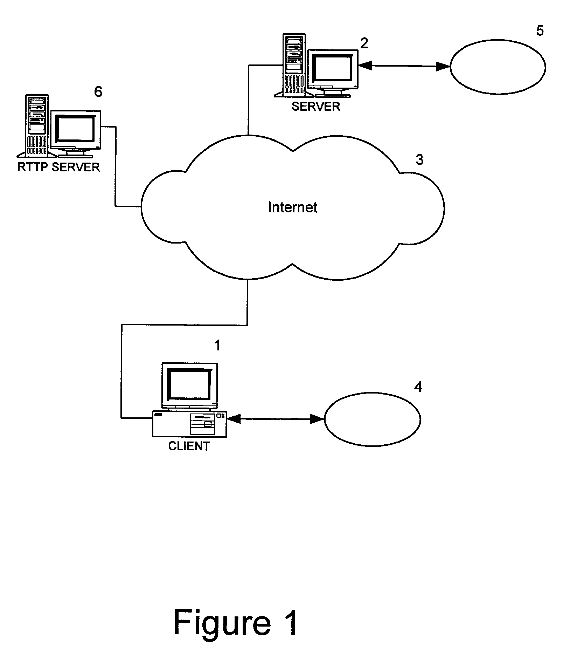

Figure 1 is a schematic diagram of an Internet based system in which a client computer 1 connects to a server computer 2 via the Internet 3. The client computer 1 is capable of running browser software 4, for example, Internet Explorer™ or Netscape Navigator™ for viewing web pages provided by web server software 5 at server computer 2. A further server computer 6, referred to herein as an RTTP server, provides a source of real-time data and its functionality will be described in detail below.

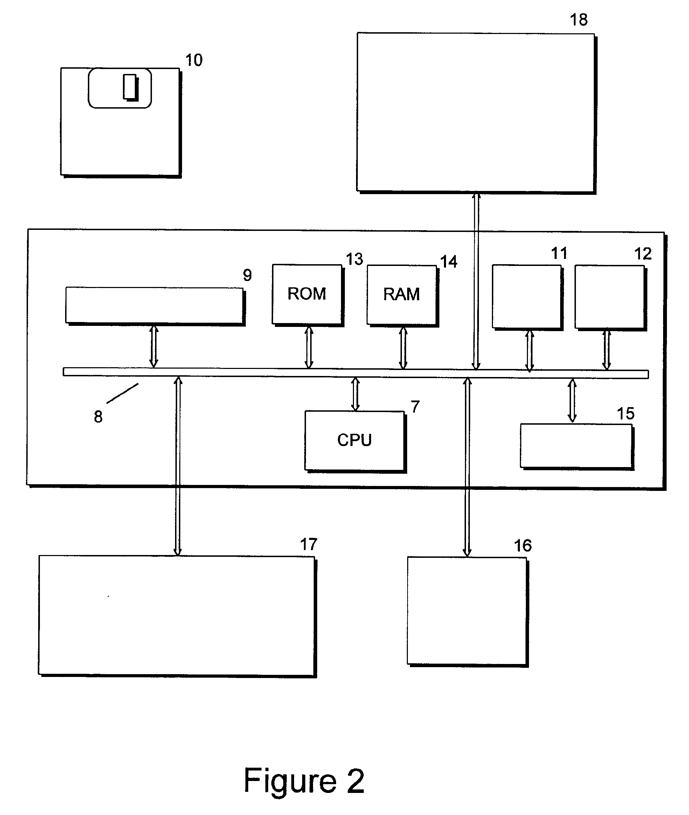

The client computer 1 and server computers 2, 6 are conventional computers, an example architecture for which is shown in Figure 2. Each computer 1, 2 comprises a central processing unit (CPU) 7 for executing computer programs and managing and controlling the operation of the computer. The CPU 7 is connected to a number of devices via a bus 8, the devices including a read/write device 9, for example a floppy disk drive for reading and writing data and computer programs to and from a removable storage medium such as a floppy disk 10, a storage device 11, for example a hard disk drive for storing system and application software, a CD-ROM drive 12 and memory devices including ROM 13 and RAM 14. The computer further includes a network card 15 for interfacing to a network 3 and user input/output devices, such as a mouse 16, keyboard 17 and display 18. It will be understood by the skilled person that the above described architecture is not limiting, but is merely an example of a typical computer architecture. It will be further understood that the described computer has all the necessary operating system and application software to enable it to fulfil its purpose.

As mentioned above, the current generation of web browsers represent the content and format of web pages as a document object model (DOM). The DOM is an application programming interface (API) for documents which defines the logical structure of documents and the way a document is accessed or manipulated. The DOM specification is under constant development by the World Wide Web Consortium (W3C), but it is currently implemented differently depending on the browser software being used, so that access to and manipulation of the elements on a web page is browser type and browser version specific. DOMs are implemented by, for example, Internet Explorer version 4 and above and Netscape Navigator version 6.

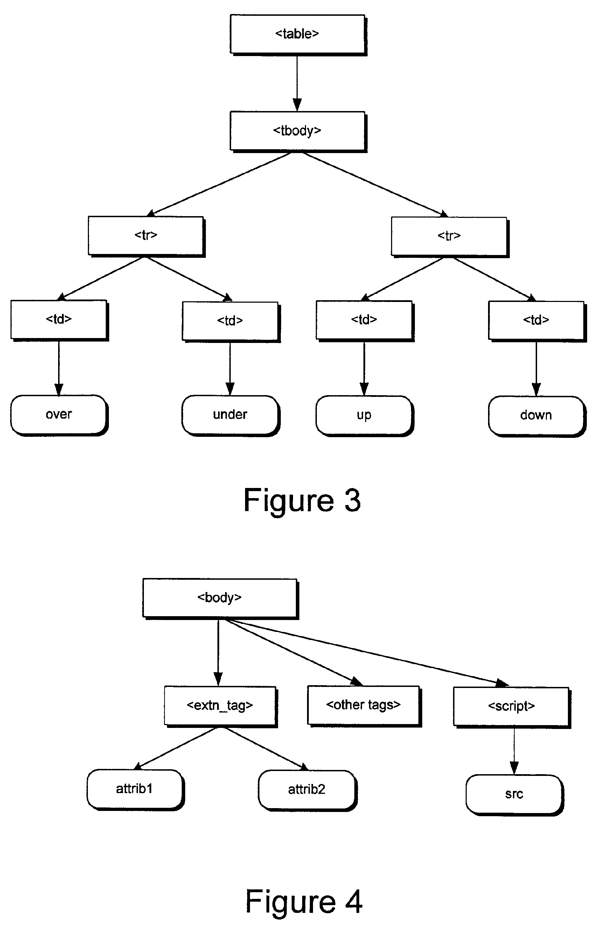

For example, the HTML extract shown as Code Extract 1 below is represented by the document object model shown in Figure 3.

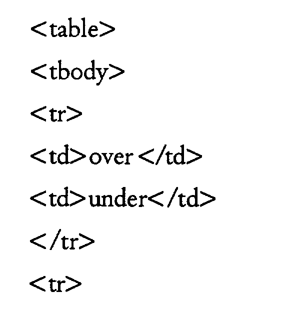

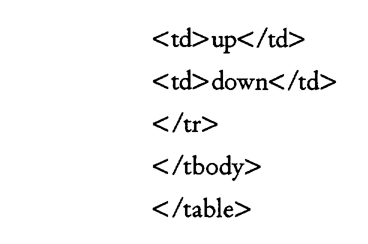

### Code Extract 1

All the content of an HTML document is represented in the document object model, including tags or attributes that the browser does not understand i.e. that are not part of the HTML specification or not supported by the browser being used. Such tags or attributes are also referred to herein as being undefined. When it comes across such tags or attributes, the browser adds them to the document object model but takes no further action. These tags or attributes are given meaning by means of a script that is included in the web page and runs within the client browser. The script identifies the new tag names and attributes and implements the actions specified by the tags. The HTML extract shown in Code Extract 2 below illustrates the use of a non-standard tag, also referred to herein as an extension tag. The extension tag EXTN_TAG (attrib1, attrib2), where attrib1 and attrib2 represent pre-defined attributes, is unknown to an HTML browser, which nevertheless stores the tag within a document object model structure shown schematically in Figure 4. Figure 4 also illustrates the storage of the tag attributes within the document object model.

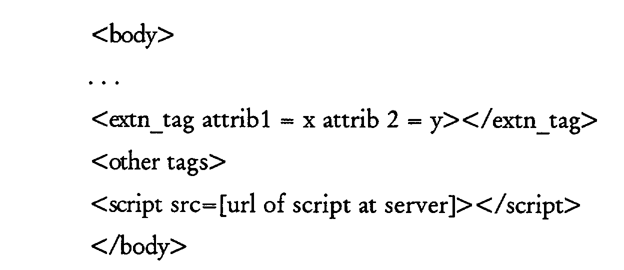

### Code Extract 2

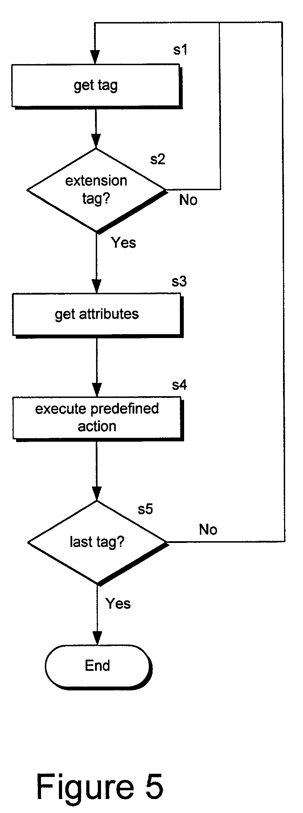

The SCRIPT tag in the Code Extract 2 above directs the browser to import and execute the Javascript program stored at the server address provided. A flowchart illustrating the operation of this program is shown in Figure 5.

Referring to Figure 5, the program gets a tag (step s1), determines whether it is an extension tag (step s2) and if not, gets the next tag (step s1). If the tag is an extension tag, the program gets the attributes attrib1 and attrib2 (step s3) and then executes some action which is predefined in relation to the extension tag and its attributes (step s4). The process is repeated until the last tag has been found (step s5). Many different types of extension tags can be created in this way, each associated with an action or sequence of actions pre-defined by the user. A whole tag need not be created: the user can instead define one or more additional attributes to be added to an existing HTML tag and search for those additional attributes on each occurrence of the known tag.

An example of a particular application which uses user-defined attributes within standard tags to provide for the inclusion of real-time data on a web page, is described below with reference to Figures 1, 6 and 7.

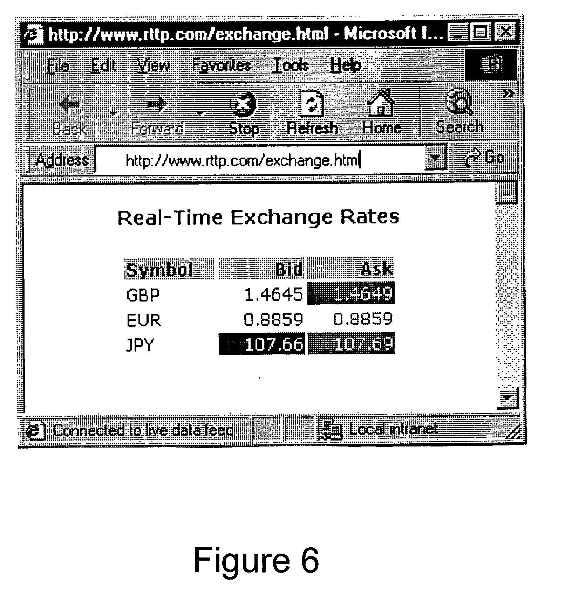

Figure 6 is a screen-shot of a web page which uses extension tags in accordance with the invention to implement an information service which displays real-time market data. Referring again to Figure 1, a subscriber to the information service views the web page by using browser software 4 on his computer 1 to connect to the web server 5 running on the server machine 2. The HTML code underlying the web page shown in Figure 6 is shown as Code Extract 3 below.

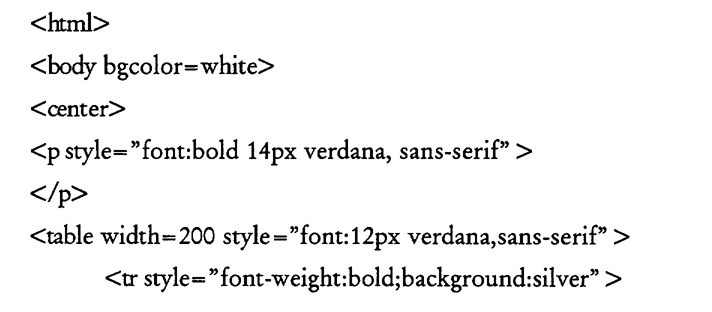

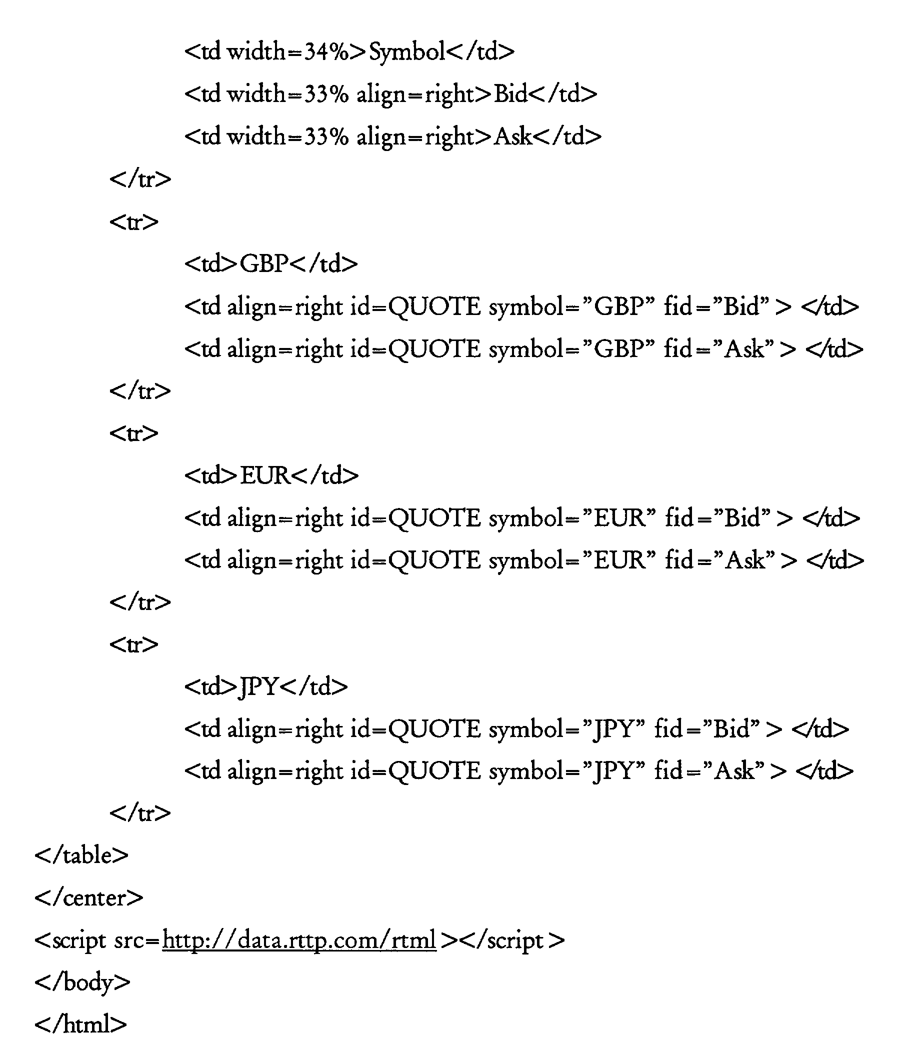

### Code Extract 3

The only non-standard HTML elements in the code extract above appear in some of the <td> tags, which are identified by the attribute id=QUOTE, as will be described in more detail below. The non-standard elements are the additional attributes 'symbol' and 'fid', which specify how live data is to be displayed. The <script> tag provides the functionality which permits the operation of this example. The general format of the <script> tag is shown below:
<script language=javascript src=url [attribute1 attribute2 ... ]> </script>

The "src" attribute points to the url of the directory containing the program, written for example in Javascript, which provides the functionality according to the invention.

Optional attributes are provided for the < script > tag which permit modification of default behaviour. These are obtained and interpreted by the script in the same way as the non-standard attributes in the modified <td> tags, as will be described in detail below. For example, a typical <script> tag is:

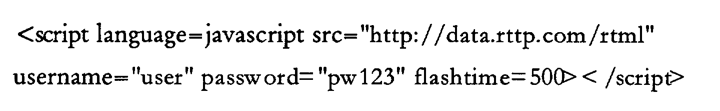

A more advanced example is given below:

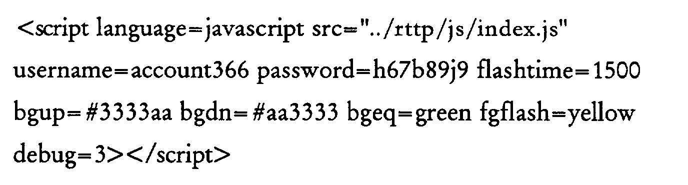

The functionality introduced by the various attributes included in the tags above, together with other attributes which can be included in the <script> tags, will be described in detail below.

The following <script> attributes are for example defined:

**username** e.g. username="account366"
This is a user name submitted to the server which provides the real-time data to identify the user when the page is first loaded. If not present in the < script> tag, the default user name "dummy" is used.

**password** e.g. password="h67b89j9"
This is a password submitted to the real-time data server for authenticating the user. If not present in the <script> tag, the default password "dummy" is used.

**debug** e.g. debug=3
This defines the errors and events that are reported when a page loads. It can have a value of, for example, 0 to 6, where 0 represents error reporting being disabled, 6 represents full error and status information reporting and levels 1 to 5 represent intermediate levels of error reporting. For example, debug level 3 represents full error reporting, but without any status information.

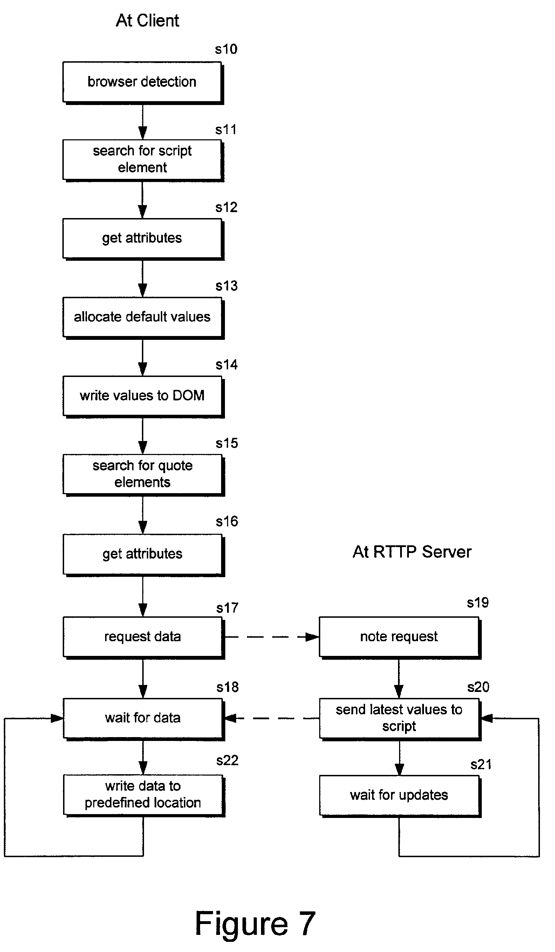

The real-time placement of quotes onto a web page is described below with reference to Figure 7. A quote is embedded at a particular position in a web page by placing it into an HTML element at that position. An HTML element is defined by a pair of tags between which text can be placed, such as <td>... </td>, <div> ... </div> or <p>... </p> tags. If no HTML element exists at the location at which the quote is to appear, one can be created by using the <span> ... </span> tag.

Referring to Figure 7, browser detection is first performed (step s10) in a manner well-known per se to determine whether the browser is at least Internet Explorer version 4, Netscape Navigator version 6 or some other browser which implements a DOM and therefore to determine which DOM should be used. Based on the selected DOM, the script looks for the <script> tag (step s11), to enable it to read any attributes which have been defined in it (step s12).

A number of optional attributes are available to control presentation of the information to be shown on the screen. For example, the "bgchange" attribute defines what constitutes 'up' and what constitutes 'down' for the purpose of determining temporary background colour change (flashing) when a value updates. Allowed values are *rel* (Relative) which specifies that a value greater than the previous value is interpreted as 'up' and a value less than the previous value interpreted as 'down', and *abs* (Absolute) which specifies that a positive value is interpreted as 'up' and a negative value as 'down'.

Other optional attributes include "bgdn", "bgup" and "bgeq", which define the colour to be used for the background flash for down, up and no change updates respectively. The colour may be any valid HTML colour. Similarly, "fgchange", "fgdn", "fgup" and "fgeq" attributes define the corresponding up/down definitions and colour changes for the foreground (text) colour change when a value updates.

An "fgflash" attribute defines the colour to which the text changes for the duration of the background 'flash'. The purpose of this is to reverse the text so that it is still visible when the background colour changes.

The "flashtime" attribute is the length of time in milliseconds for which the background to each element remains highlighted, i.e. flashes, when the value of that element is updated. For example, flashtime=500 causes the colour of each element to change when the value updates and to revert to the original colour half a second later.

If an attribute is not specified in the script tag, it is allocated a default value by the script (step s13).

The allocated and default values are then written to the document object model by the script, so defining how the data retrieved from the data source is to be presented (step s14).

The script then searches for a quote element according to the invention, which is an extension tag which contains the identifier id=QUOTE (step s15). The format of a quote element in accordance with the invention is shown below:
<tag id=QUOTE attribute1 attribute2 ... Qattribute1 Qattribute2 ...>
where attribute 1, attribute2 etc. are the normal HTML attributes for the tag and Qattribute1, Qattribute2 etc. are quote attributes that define what information is to be inserted and how it is to be displayed.

In the example given in Code Extract 3, the tag format of a quote element is for example:
<td align = right id=QUOTE symbol="EUR" fid="Bid"> </td>

The <td> tag is known to HTML, as are its attributes align and id. The id attribute is used in this case to identify the tag as an extension tag, i.e. one that contains attributes which are unknown to HTML, but which can be interpreted by the script. In the example above, these unknown attributes are 'symbol' and 'fid'.

Once a quote element has been found, the script searches for and loads the attributes specified in the element (step s16). Every quote element requires the 'symbol' and 'fid' attributes to be defined to specify what is to be displayed, either explicitly in the tag or by previously setting default values for the attributes.

The 'symbol' and 'fid' attributes reference information, such as financial information, from an external data source. For example, Caplin Systems Ltd., London, UK, have developed a web protocol known as Real Time Text Protocol (RTTP), which implements real-time streaming for almost all types of information, including logical records, news and free-format pages. RTTP data sources for providing information which is capable of being referenced by the symbol and fid attributes are available by subscription over the Internet.

The 'symbol' attribute specifies the financial instrument to which the quote tag relates. The symbol used to identify a particular instrument depends on the symbology being used by the data source. For example, symbol= "/IBM.N" represents the Reuters symbology for the real-time price of IBM ordinary shares traded on the New York Stock Exchange. The symbols "GBP", "EUR" and "JPY" used in the example above represent different currencies.

The 'fid' attribute, which stands for "field identifier", specifies a piece of data relating to the financial instrument selected by the 'symbol' attribute. For example, typical values for a particular stock are "Bid", "Ask", "Mid", "Chng" and "Cls", representing the bid price, asking price, mid price, change on the day and previous day's closing price respectively. The range of 'fids' available for a particular financial instrument depends on the symbology being used by the data source. For example, fid= "Ask" displays the most recent price at which the instrument specified by the 'symbol' attribute was offered for sale in the market.

The specified attributes are used to retrieve the data from the real-time data source. For example, a Java applet is used to implement a connection between the script and the RTTP server 6 shown in Figure 1. A request is sent via the applet to the RTTP server 6 specifying the required data by means of the symbol and fid attributes (step s17). The script then waits to receive data from the server (step s18). The RTTP server 6 notes the data request (step s19) and sends the latest available value of the updated data to the script (step s20). Every time the value of the requested data is updated (step s21), the updated value is sent to the script by the RTTP server (step s20). The retrieved data is then written into the document object model and is therefore presented in the pre-defined locations on the browser screen (step s22).

While the above method has been described in relation to an RTTP server which provides a source of streaming data, it will be understood that the invention is not limited to this, but can be implemented with any data source, including a source from which data can be periodically requested, or by any method by which numerical or other information is updated or computed.

Although the Web server machine 2 and RTTP server 6 have been shown as separate computers, it will be understood that the web server 5 and RTTP server 6 can be server processes running on the same physical machine.

## Claims

1. A method of processing a hypermedia document, the document comprising: information defined in a hypermedia markup language, information which is undefined in the hypermedia markup language and program instructions, the method comprising:
executing the program instructions to perform a predetermined function in dependence on the undefined information.

2. A method according to claim 1, wherein the program instructions are defined in a scripting language.

3. A method according to claim 1 or 2, wherein the undefined information is embedded in the defined information, further comprising extracting the undefined information from the defined information.

4. A method according to any one of the preceding claims, wherein the undefined information is referenced through a document object model created by a client application from the hypermedia document, further comprising searching the document object model for the undefined information.

5. A method according to any one of the preceding claims, including retrieving data to be displayed from an external source in dependence on the undefined information.

6. A method according to claim 5, comprising receiving the data continuously in response to a request for the data.

7. A method according to claim 5, comprising retrieving the data periodically.

8. A method according to any one of claims 1 to 4, including computing data to be displayed in dependence on the undefined information.

9. A method according to any one of claims 5 to 8, further comprising writing the data to be displayed to the document object model, whereby the data is displayable by the client application.

10. A method according to any one of claims 4 to 9, wherein the client application comprises a web browser.

11. A hypermedia document for display by a client application, the document including information defined in a hypermedia markup language, information which is undefined in the hypermedia markup language and program instructions, the program instructions being executable to perform a predetermined function in dependence on the undefined information.

12. A hypermedia document according to claim 11, wherein the defined information includes a tag having defined attributes and the undefined information comprises additional undefined attributes for the tag.

13. A hypermedia document according to claim 12, wherein the undefined attributes of a given tag specify data items to be displayed.

14. A hypermedia document according to claim 12 or 13, wherein the undefined attributes of a given tag specify how data items are to be displayed.

15. A hypermedia document according to claim 13 or 14, wherein a first attribute identifies an entity about which information is to be displayed.

16. A hypermedia document according to claim 15, wherein a second attribute identifies one of a plurality of characteristics of the entity.

17. A hypermedia document according to any one of claims 11 to 16, wherein the client application comprises a web browser.

18. A method of providing real-time information for display as a hypermedia document, the document including a tag defining the location at which the information is to be displayed, the tag being associated with at least one attribute, comprising:
retrieving the information to be displayed in dependence on the one or more attributes associated with the tag; and
writing the information to the predefined location in the hypermedia document.

19. A method according to claim 18, comprising executing program instructions contained in the document to determine an index associated with the or each attribute, said index determining the information which is to be retrieved.

20. A method according to claim 18 or 19, further comprising continuously receiving and writing the information to be displayed.

21. A method according to claim 18 or 19, further comprising periodically retrieving and writing the information to be displayed.

22. A system for displaying information, comprising:
means for accessing a hypermedia document;
a client application for rendering the hypermedia document;
program means associated with the hypermedia document for interpreting information within the hypermedia document which is not interpretable by the client application; and
means for receiving information to be displayed in response to said interpretation.

23. A system according to claim 22, wherein the hypermedia document includes a tag defining the location at which the information is to be displayed, the tag being associated with at least one attribute which is interpretable by the client application, the information which is not interpretable by the client application comprising additional attributes associated with the tag which index the data to be displayed.

24. A system according to claim 22 or 23, wherein the program means is operative to request the information to be displayed and in response to said request, to receive a stream of information for display.

25. A system according to claim 22 or 23, wherein the program means is operative periodically to retrieve data to be displayed and to provide the data for display.
